# EUROPEAN PATENT SPECIFICATION

(11) **EP 0 894 391 B1**
(45) Date of publication and mention of the grant of the patent: **20.07.2005**
(21) Application number: 97915777.3
(22) Date of filing: 14.04.1997
(51) Int. Cl.: H04L 29/06, H04L 12/26, G06F 17/30

(54) **SYSTEM AND METHOD FOR EFFICIENT INFORMATION TRANSFER**
SYSTEM UND VERFAHREN ZUR EFFIZIENTEN INFORMATIONSÜBERTRAGUNG
SYSTEME ET PROCEDE DE TRANSFERT EFFICACE D'INFORMATIONS

(30) Priority: 15.04.1996 US 632102; 11.04.1997 US 832687
(43) Date of publication of application: 03.02.1999
(73) Proprietor: Interactive Communication Group S.A, 1110 Morges (CH)
(72) Inventor: EIKELAND, Martin, N-1340 Bekkestua (NO)
(74) Representative: Ganguillet, Cyril
(86) International application number: PCT/NO1997/000096
(87) International publication number: WO 1997/039548

(56) References cited:
- EP-A- 0 384 339
- EP-A- 0 570 683
- EP-A- 0 582 537
- EP-A- 0 632 672
- US-A- 5 329 619
- US-A- 5 347 632
- US-A- 5 500 890
- RECORD OF THE ASILOMAR CONFERENCE ON SIGNALS, SYSTEMS AND COMPUTERS, PACIFIC GROVE, OCT. 30 - NOV. 2, 1994, vol. VOL. 1, no. CONF. 28, INSTITUTE OF ELECTRICAL AND ELECTRONICS ENGINEERS, pages 238-242, XP000533581 KHAYATA R E ET AL: "DISTRIBUTED MEDIUM ACCESS PROTOCOL FOR WIRELESS LANS"
- PROCEEDINGS OF THE 1995 USENIX TECHNICAL CONFERENCE, 16 - 20 January 1995, NEW ORLEANS, LA, USA, pages 71-82, XP002042874 I. WAKEMAN, A. GHOSH, J. CROWCROFT, V. JACOBSON, S. FLOYD: "Implementing real time packet forwarding policies using streams"
- COMPUTER NETWORKS AND ISDN SYSTEMS, vol. 28, pages 1493-1499, XP002037594 KOHDA Y ET AL: "UBIQUITOUS ADVERTISING ON THE WWW: MERGING ADVERTISEMENT ON THE BROWSER"

## Description

### Background of the Invention

The present invention relates generally to computer networks that connect information providers and end-users of network services. More particularly, the present invention relates to a system for providing targeted information to users efficiently.

A user often connects to a network service to view or download information from a wide array of resources. Network services include various networks, e.g., Internet, or other online services, e.g., America Online, CompuServe, DIALOG, GEnie, and PRODIGY. When a user selects desired information from such a service, the service transmits the selected information to the user over a network transmission medium in packets. The transmission capacity of a network is measured in bandwidth and information packets are transmitted over available bandwidth using TCP/IP (Transmission Control Protocol / Internet Protocol). Currently, network service users have exclusive control over selecting information for viewing or downloading.

US-A-5,347,632 discloses a computer network that connects information providers with end-users of network services (e.g. Internet) and which is able to provide targeted information (e.g. advertisements) to users and wherein user characteristics are monitored by the system in order to generate and display specific advertisements to the user based on individual usage characteristics and predetermined interests. At log on, and ad-manager at the user's terminal pre-fetches targeted advertisements from a queue in the server and maintains a list of advertisements at the user's terminal that the user can request or not.

The known systems however have many disadvantages. First, the network service user greatly underutilizes the available bandwidth. For example, no use is made of free space between information packets transmitted over an active transmission medium. Additionally, the entire bandwidth of an idle link is wasted when the user does not request information transfer.

In addition to the significant underutilization of the bandwidth, one-sided control of information transfer by the user is undesirable from the perspective of both users and information providers, such as commercial or non-commercial entities that furnish information to users through network services. The Internet offers a vast amount of information and continues to expand with tremendous speed, making it extremely difficult for any one user to maintain a comprehensive knowledge of all available information and resources and keep current with the changes and additions to the Internet resources. Most often, a user accesses only a small portion of the available information and a user's breadth of access depends significantly on the user's current knowledge of the available resources. Therefore, the user receives only a part of the benefit the Internet can provide.

One-sided user control further restricts information providers from offering better services. Currently, information providers cannot furnish information directly to a specific group of users. Only users who know of and make effort to access specific information receive that information. Moreover, information providers only transmit information to specific users by e-mail (electronic mail). Mass e-mail, however, is not specifically targeted to a particular audience, and many users find mass e-mail irrelevant or uninteresting and quickly discard it as "junk mail."

Additionally, information providers often cannot gather information about the users' access to its products, such as what content they view, when they view it, how often they view it, and how long they view it. Information providers also may not know its number of users or their demographics. For example, although it is possible to record how many times an Internet site has been accessed, that record does not demonstrate whether the user actually views the information. Good statistical information data can help information providers assess user interests, and thereby improve and better tailor the information to user interest.

Therefore, it is desirable to maximize the use of network bandwidth by delivering information targeted specifically to a user's interests and hobbies during times when the network is not otherwise engaged. For example, it is desirable to transmit information to users during idle times. It is also desirable to transmit targeted information to the user by utilizing otherwise idle bandwidth and thus cause little or no additional delay to normal network traffic.

In addition, it is desirable to gather information about the users without invading user privacy.

It is further desirable to generate a report of user responses for information providers with accurate assessment of user demand to create a more attractive and dynamic network service environment.

### Summary of the Invention

Accordingly, the present invention is directed to a computer network that substantially obviates one or more of the problems due to limitations and disadvantages of the related art.

In accordance with the purpose of the present invention, as embodied and broadly described, the invention provides a computer network for connecting information providers and users for transferring target information to the users comprising a user node, a master database, a master node, and a master program. The user node includes means for sending a node ID corresponding to the user node, means for controlling the transfer of the target information in the background while transferring non-target information to the user node without additional communication delay, and means for receiving the target information. The master database contains profile information and corresponding target information reference. The master node, coupled to the user node, includes means for transferring the target information reference to the user node. The master program, coupled to the master node and the master database, includes means for receiving the node ID from the user node, means for accessing from the master database profile information corresponding to the node ID, and means for transmitting the target information reference corresponding to the accessed profile information to the user node.

According to another aspect of the present invention, a method for connecting information providers and users comprises several steps. A user node sends to a master program a node ID corresponding to the user node. The master program accesses profile information corresponding to the node ID, and transmits a target information reference corresponding to the accessed profile information to the user node. The user node controls the transfer of the target information in the background while transferring non-target information to the user node without additional communication delay, and receives the target information.

### Brief Description of the Drawings

The accompanying drawings, which are incorporated in and constitute a part of this specification, illustrate the invention and together with the description, serve to explain the principles of the invention.

In the drawings,
Fig. 1 is a block diagram of a preferred embodiment of the computer network according to the present invention;
Fig. 2 is a functional representation of the computer network shown in Fig. 1;
Fig. 3 is a flowchart of a user registration process according to a preferred implementation of this invention;
Fig. 4 is a diagram illustrating several lists in the master database shown in Fig. 1;
Figs. 5A and 5B are flowcharts of the overall process of a computer network of Fig. 1;
Fig. 6 is a schematic diagram of a network traffic monitor according to one embodiment of the present invention;
Fig. 7 is a flowchart illustrating the process of the network traffic monitor of Fig. 6;
Fig. 8 is a schematic diagram of a special FTP service software according to another embodiment of the present invention; and
Fig. 9 is a flowchart illustrating the process of controlling network traffic according to yet another embodiment of the present invention.

### DESCRIPTION OF THE PREFERRED EMBODIMENT

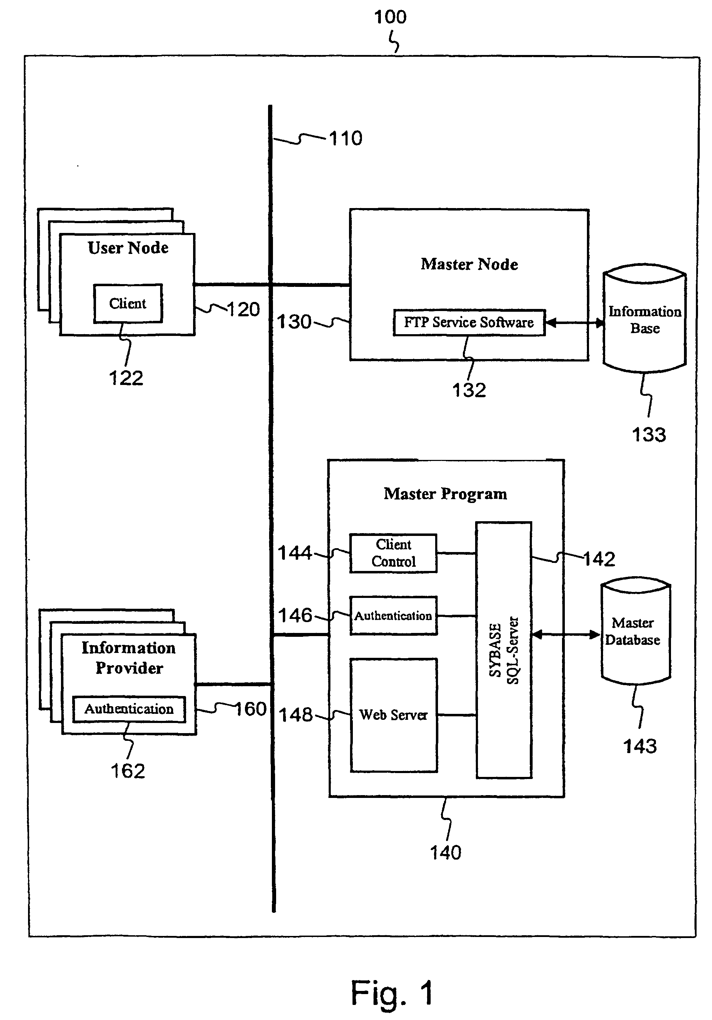

Fig. 1 shows a computer network 100 according to the present invention. Various hardware and software components of computer network 100 are connected by transmission medium 110. A user node 120 is typically a personal computer, and Client 122 is a program resident on user node 120 to control network information transfer.

A master node 130 is preferably a server which has a special FTP (File Transfer Protocol) service 132 that transfers information to the user in conjunction with Client 122. Preferably, service 132 includes FTP software that provides the necessary mechanism to minimize interference with network traffic. Special FTP service 132 also accesses information base 133 containing referenced information items.

Master program 140 is a large server preferably built on a Sybase SQL-Server platform 142, but one of ordinary skill can easily substitute the Sybase SQL-Server with other similar database technology. Sybase SQL-Server platform 142 accesses a master database 143, which contains user information including user profile information and target information references. A client control program 144 interacts with Client 122 on user node 120. An authentication program 146 monitors network access, and a web server 148 provides a home page for user node registration, information, and maintenance.

Information providers 160, containing an authentication program 162 to monitor network access, may include a wide array of commercial and non-commercial entities desiring to furnish information on the network.

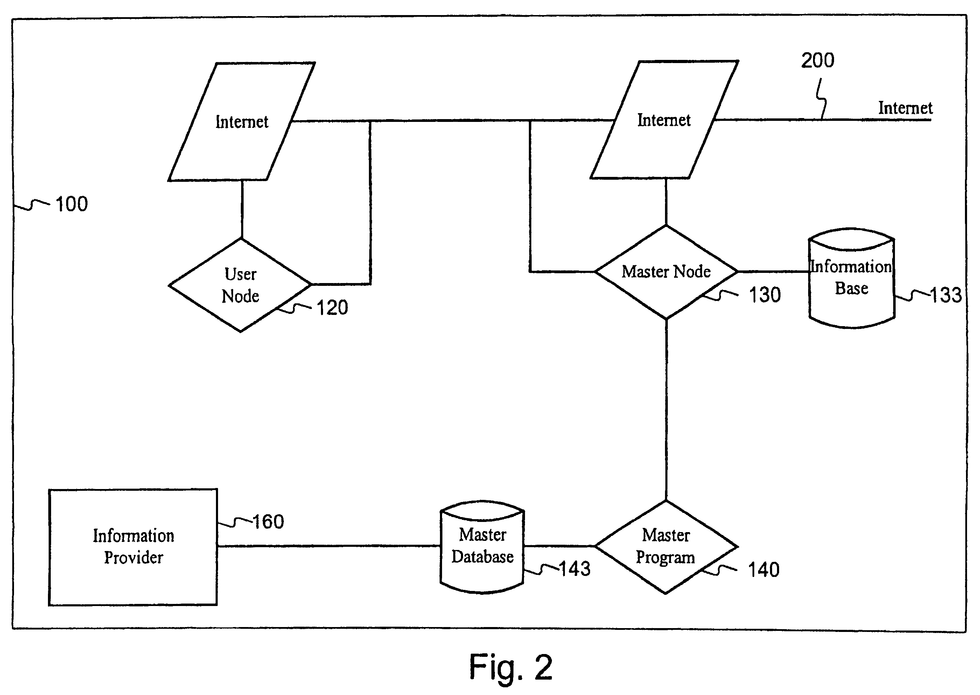

Fig. 2 is a functional representation of the computer network 100 shown in Fig. 1. For convenience, Internet will be used as an exemplary network service.

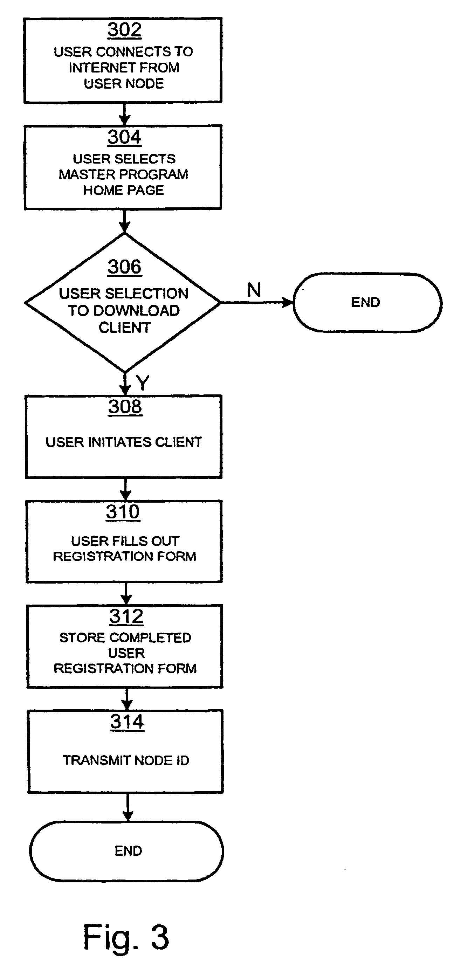

The first step in using network 100 is the user node registration process, which will be explained with reference to Fig. 3. To start a network session, a user at user node 120 connects to the Internet 200 of Fig. 2 (step 302). While "surfing" on the Internet 200, the user may select the home page of master program 140 (step 304).

If user node 120 is not registered, the user may select to download Client 122 (step 306). The user can then initiate Client 122 (step 308) and complete the registration form on screen by providing user profile information, such as age, gender, educational level, work status, items of interests, and hobbies (step 310). User profile information may be updated at any time during or after the registration process. Additionally, updates of Client 122 may also be downloaded at any time while preserving the registered user profile information.

User node 120 transmits the completed form to master program 140, which stores it in master database 143 (step 312). Once master program 140 receives the completed form from user node 120, program 140 transmits a unique node ID to user node 120 (step 314). This completes the user node registration process. On subsequent user connections, master program 140 uses the registered user profile information corresponding to the node ID of user node 120 regardless of the identity of the particular user at user node 120. Additionally, after Client 122 has been downloaded and is active on user node 120, authentication program 146 is not executed on subsequent user access to network 100.

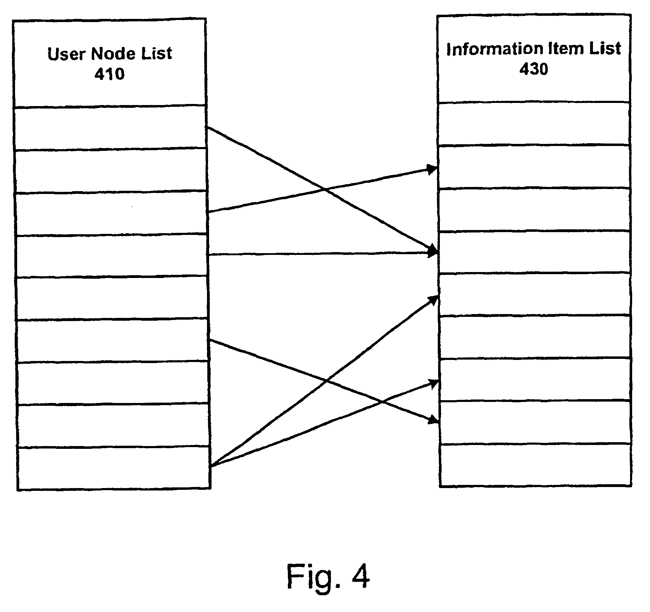

Fig. 4 shows two lists, *i*.*e*., user node list 410 and information item list 430. Node IDs corresponding to registered user node 120 are compiled in user node list 410. Use of node IDs ensures user privacy and anonymity because the node IDs do not reveal the identity or profile of a particular user at user node 120. Each segment of user node list 410, preferably containing a single node ID, points to a particular segment of information item list 430 that contains pointers or addresses to the relevant target information to be sent to user node 120.

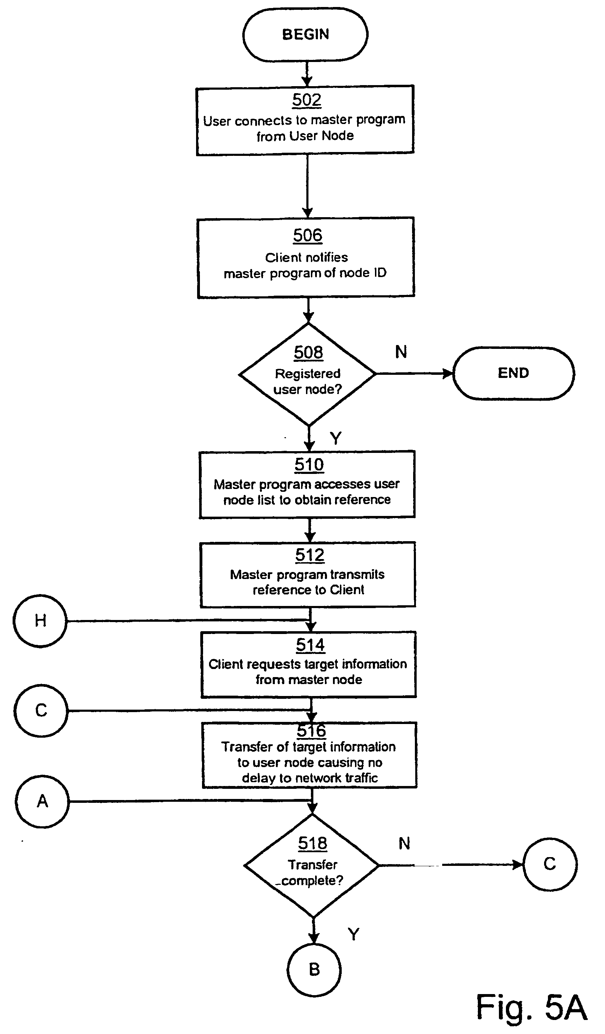

Fig. 5A contains a flowchart showing the process of transmitting target information to user node 120 using otherwise idle bandwidth. When a user at user node 120 connects to web server 148 of master program 140 (step 502), Client 122 notifies master program 140 of the node ID (step 506). If master program 140 receives a node ID from a registered user node 120 (step 508), master program 140 accesses user node list 410 to identify the corresponding segment of information item list 430 (hereinafter referred as "reference") stored in master database 143 (step 510). Upon request from Client 122, master program 140 transmits the reference to Client 122 of user node 120 (step 512). This enables Client 122 to begin requesting target information stored in information base 133 corresponding to the reference (step 514).

During the user's session on computer network 100, either master node 130 or Client 122 automatically transfers the referenced target information in the background to user node 120, causing little or no delay to network traffic (step 516). The target information is transmitted in packets over a transmission medium until all packets are transferred (step 518).

To transfer target information causing little or no additional communication delay of non-target information between master node 130 and user node 120, Client 122 causes master node 130 to send target information packets on an active link when non-target information packets are not being sent. If a link is completely idle, for example, when the user is not requesting any information, Client 122 causes master node 130 to send target information packets over the idle link.

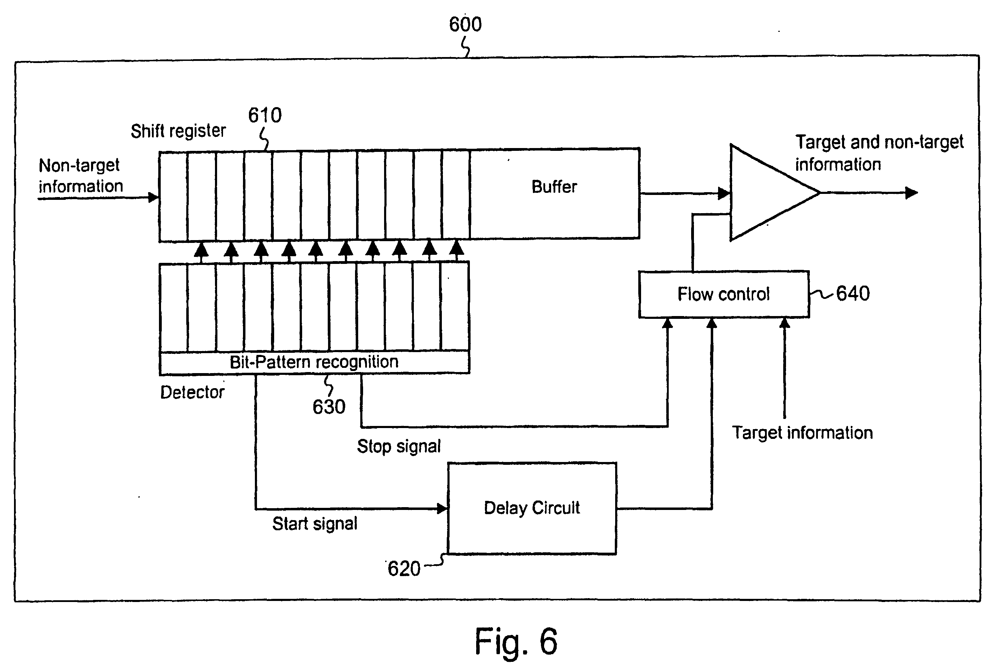

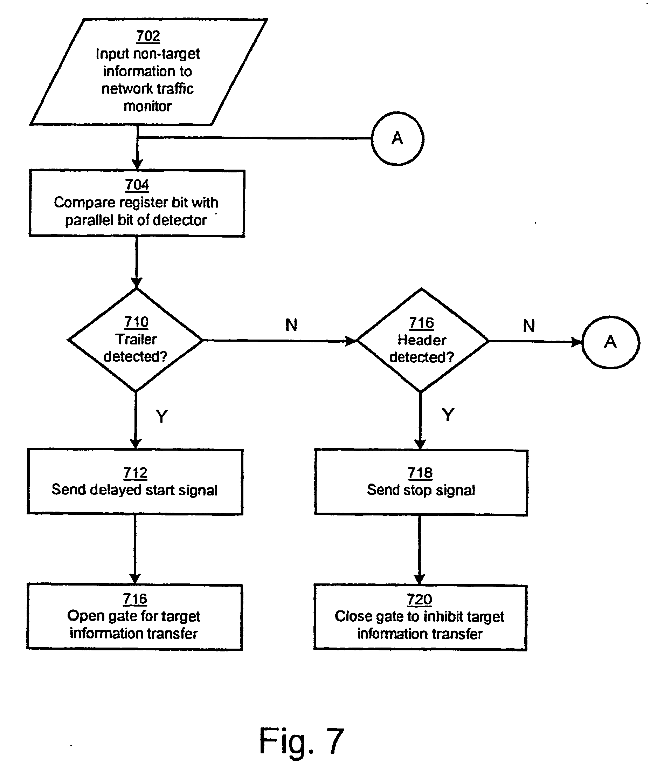

Figs. 6 and 7 show a schematic diagram and flowchart, respectively, of a circuit used to eliminate communication delay of non-target information according to one embodiment of special FTP service 132 of the present invention. Network traffic monitor 600 resident on master node 130 includes a shift register 610, a delay circuit 620, a detector 630, and a flow control 640. Network traffic monitor 600 monitors the network traffic on the transmission medium between user node 120 and master node 130.

First, non-target information packet is input to network traffic monitor 600 (step 702). Each bit of shift register 610 is then compared to a parallel bit of detector 630 to detect an identification bit-pattern, *i*.*e*., header or a trailer, of non-target information packets (step 704). If a trailer of an information packet is detected (step 710), a delayed start signal is sent by delay circuit 620 to flow control 640 (step 712) to open the gate for transfer of target information packets (step 716). The delayed start signal ensures that all non-target information has been transferred before initiating target information transfer.

On the other hand, if a header is detected (step 716), a stop signal is immediately sent to flow control 640 (step 718) to close the gate to inhibit the transfer of target information packets (step 720). Delay circuit 620 actually sends the stop signal before the detected non-target information packet to assure that incoming non-target information does not collide with incoming target information packets.

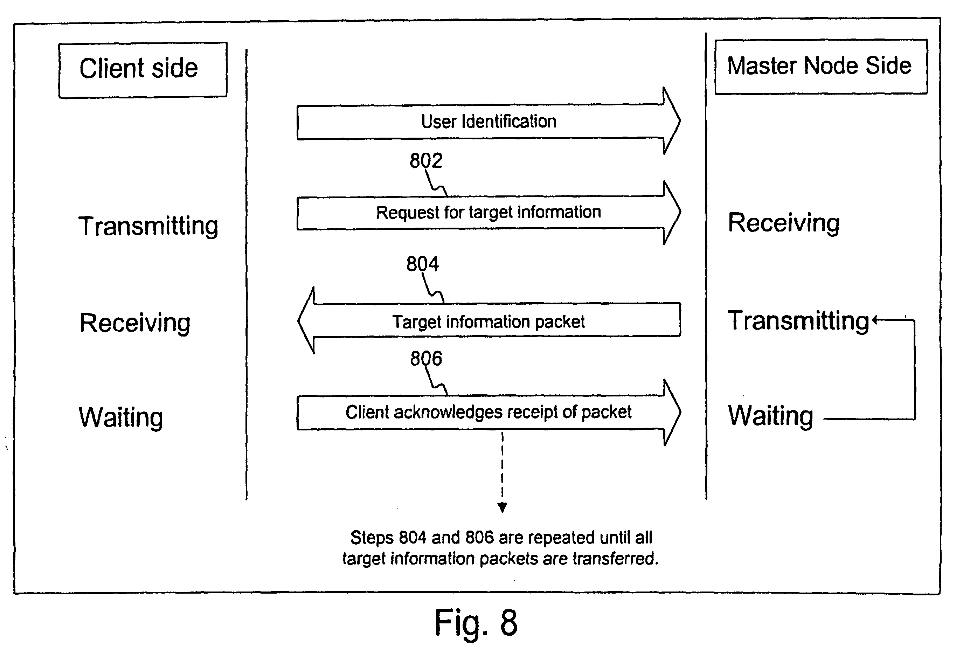

Fig. 8 shows a schematic diagram of special FTP service software 132 for minimizing communication delay of non-target information according to another embodiment of special FTP service 132. In this embodiment, master node 130 regulates the transfer of target information packets depending on the amount of network traffic on the transmission medium.

As previously explained, Client 122 on user node 120 begins to request transfer of target information from master node 130 (step 802). Upon receiving the request for target information, master node 130 sends a packet of target information to Client 122 (step 804). Client 122 receives the target information packet and returns an acknowledgment of receipt to master node 130 for each packet received (step 806). Steps 804 and 806 repeat until a complete unit of target information is transferred to a temporary file at user node 120.

Master node 130 estimates the level of non-target information traffic by measuring the length of time between transmittal of a target information packet and receipt of acknowledgment from Client 122. If there is little network traffic, an acknowledgment is returned quickly. The higher the level of network traffic, the longer it takes to receive an acknowledgment. The master node 130 adjusts the amount of target information packets transmitted in accordance with the amount of time it takes to receive Client 122 acknowledgments. When the amount of time to receive acknowledgments reaches a predetermined maximum, however, master node 130 reduces the number of target information packets transferred. Therefore, transfer of target information packets has a minimal effect on non-target information traffic.

In ordinary TCP/IP, a maximum amount of data is transmitted and long trains of IP packets are queued on the receiving side. However, the present embodiment sends only a limited amount of target data to avoid interfering with the transfer of non-target information. Hence, the user does not notice any significant increase in transmission times for ordinary Internet traffic.

The process demonstrated in Fig. 8 may be modified to pace the transfer of target information packets dynamically by time-stamping the acknowledgments. This relieves master node 130 from waiting for actual acknowledgments of each packet.

Additionally, the process may also be modified to adjust the size of the send-window dynamically (number of bytes/packets sent before receiving acknowledgment). Master node 130 may adjust the send-window size according to estimates made by tracing the amount of time it takes to receive acknowledgment. For example, user node 120 with a 28.8 kbps modem can tolerate a much higher transfer rate than one with a 12.4 kbps modem. Hence, the send-window can be adjusted accordingly.

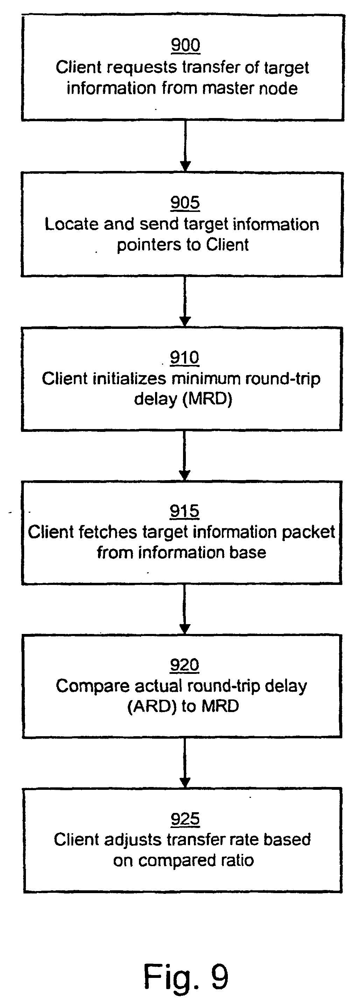

Fig. 9 shows another process consistent with the present invention, where Client 122 controls the transfer of target information to user node 120. Similar to previous embodiments, Client 122 on user node 120 requests transfer of target information from master node 130 (step 900). In response, master node 130 locates the reference corresponding to the segment of user node list 410 corresponding to the node ID. Once master node 130 locates the reference containing target information pointers, node 130 sends the reference to Client 122 (step 905).

Client 122 receives the reference from master node 130, and regulates the transfer of target information according to the target information pointers. Initially, Client 122 sets a predetermined value of a minimum round-trip delay (MRD), the minimal amount of time necessary between the request and receipt of network information (step 910). One may set the MRD of a target information packet, for example, to 200 milliseconds. In the preferred embodiment, MRD should be set slightly lower than the actual estimated MRD. This increases the possibility that target information transfer will not interfere with non-target information traffic.

Once the initial MRD is set, Client 122 begins to fetch the target information from information base 133 corresponding to the target information pointers (step 915). Client 122 preferably fetches the target information one packet at a time. Throughout the process, Client 122 preferably measures the actual round-trip delay (ARD) of each packet of target information and compares that to the MRD (step 920). Client 122 adjusts the transfer rate of the target information based on the ratio of ARD to MRD (ARD/MRD) (step 925).

If the ARD/MRD ratio is 1-1, for example, Client 122 may wait a preset time period, *i.e.,* 2 seconds, before fetching the next packet of target information. As the ARD/MRD ratio increases, however, the wait time before fetching another target information packet should increase accordingly. If, for example, ARD is 300 milliseconds while MRD is 200 milliseconds, then Client may wait 3 seconds before the next fetch.

A low ARD/MRD implies little or no non-target information network traffic, thus allowing transfer of target information packets using otherwise underutilized bandwidth. A high ARD/MRD ratio, on the other hand, implies a high level of non-target information network traffic, so Client 122 decreases the transmission rate of the target information packets accordingly.

One of ordinary skill may vary the relationship between the ratio and the corresponding wait time, for example, linearly or exponentially. By adjusting the wait time dynamically based on the ARD/MRD ratio, Client 122 ensures that the transfer of target information will cause no additional delay to non-target network traffic. The ratios and wait times described here are exemplary only, and one skilled in the art may easily modify various settings including the frequency of ARD/MRD ratio comparison, the initial MRD, and the corresponding wait time.

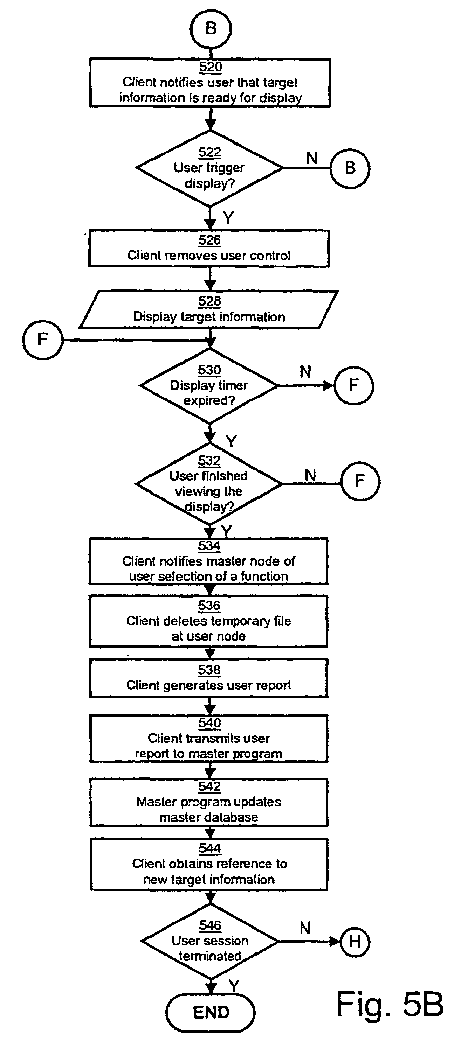

Referring to Fig. 5B, once the transfer of target information is complete, Client 122 notifies the user that the target information is ready for display by presenting a floating icon on the user's screen (step 520). Display of target information may be initiated by the user clicking the floating icon (step 522). Before displaying the target information, however, Client 122 preferably removes the user's window control and disables normal keyboard and mouse input at user node 120, thus ensuring that the user views the displayed information without interruption (step 526).

Once Client 122 detects that the floating icon has been selected, Client 122 opens a new browser window, for example, a SpyGlass API compatible browser or a standard browser. The window is maximized to fill the whole display screen, and the user is presented with a display of the target information for a predetermined display time period (step 528). As mentioned above, during this predetermined period, the user has no control of input devices such as keyboard or mouse.

Client 122 sets the display timer to determine the display period of the target information. When the display timer expires (step 530), however, a user may click the mouse button to acknowledge that the user has finished viewing the message (step 532). The click of the mouse releases the lock and enables user control of input devices. Additionally, Client 122 displays a menu of functions in the target information display.

These functions, such as DONE, MORE, SAVE, GET, and EXIT, may be represented by icons. The DONE icon notifies Client 122 that the user has finished viewing the displayed information. The MORE icon enables the user to access more information about the displayed item. Activation of this icon will connect the user to a predetermined web page of the particular information provider of the displayed target information. The SAVE icon saves the displayed target information on user node 120 for later retrieval or viewing. The GET icon allows the user to retrieve a previously saved target information, and EXIT icon closes the target information display and returns to the previous display.

When a user selects one of the functions, Client 122 notifies master node 130 (step 534) and deletes the target information from the temporary file at user node 120 (step 536). Client 122 also compiles and generates a user report containing display statistics, such as target information displayed, time and date of display, duration of display, optional request using the MORE icon, and accounting information (step 538). Client 122 eventually transmits the user report to master program 140 (step 540), and master program 140 updates master database 143 with the user report (step 542). Client 122 obtains another reference to new target information in accordance with the updated information (step 544).

The process discussed above of transferring and displaying target information continues until the conclusion of the user's session on computer network 100 (step 546). In the meantime, information providers 160 may access master program 140 for accurate and up-to-date user responses detailing display statistics.

During the user's session on network 100, client control program 144 periodically sends a message to Client 122 in the background to command Client 122 to continue operating. If Client 122 does not receive the message within a predetermined time period, *e*.*g*., user has disconnected from network 100 or abnormal tennination occurred due to power failure, Client 122 cleans out the temporary file area of user node 120 and terminates its operation. Thus, Client 122 does not unnecessarily occupy temporary file area of user node 120 when the user is not connected to network 100.

### CONCLUSION

This invention uses otherwise idle bandwidth by transmitting information specific to a user's profile while minimizing additional delay to the normal network traffic, and generates a report of user responses for information providers with accurate assessment of user demand. It does so by providing a new media channel, to assemble, distribute, and present information while it collects user responses.

The present invention is useful to non-commercial entities that desire to disseminate information to a target audience, for example, during an election campaign. Moreover, commercial advertisers can now obtain accurate user responses in order to strategically market their products and services. This invention also provides a forum for commercial information providers to subsidize user's online service costs in exchange for a user periodically viewing the target information during the user's session on the network.

It will be apparent to those skilled in the art that various modifications and variations can be made in the computer network of the present invention and in construction of this computer network without departing from the scope or spirit of the invention. Other embodiments of the invention will be apparent to those skilled in the art from consideration of the specification and practice of the invention disclosed herein. It is intended that the specification and examples be considered as exemplary only.

## Claims

1. A computer network (100) for connecting information providers and users, comprising:
a user node (120) including
means for sending a node ID corresponding to the user node, or a user ID corresponding to a current user of the user node,
means for receiving a target information reference,
means for fetching target information using the target information reference, and
means for controlling the transfer of the target information in a background state while receiving non-target information to the user node without additional communication delay;
a master database (143) containing profile information and corresponding target information reference,
a master node (130), coupled to the user node, and including means for transferring the target information to the user node; and
a master program server (140), coupled to the master node and the master database, and including
means for receiving the node 1D or the user ID from the user node,
means for accessing from the master database profile information corresponding to the node ID or user ID, and
means for transmitting to the user node, through the master node, the target information reference corresponding to the accessed profile information.

2. The computer network of claim 1, wherein the controlling means includes
means for measuring round-trip delay time for delivering the target information.

3. The computer network of claim 2, wherein the controlling means further includes
means for computing a ratio between the round-trip delay time and a predetermined minimum round-trip delay time for delivering the target information, and
means for adjusting a transmission rate of the target information based on the computed ratio.

4. The computer network of claim 1, wherein the controlling means further includes
means for requesting the target information corresponding to the target information reference.

5. The computer network of claim 1, wherein the controlling means includes
means for fetching the target information during times when non-target information is not being sent.

6. The computer network of claim 1, wherein the user node further includes
means for displaying the target information.

7. The computer network of claim 6, wherein the displaying means includes
means for monitoring a predetermined display period of the target information.

8. The computer network of claim 6, wherein the displaying means includes
means for disabling user control of the display during the display of the target information.

9. The computer network of claim 6, wherein the displaying means includes
means for enabling user control of the display after expiration of a predetermined display period.

10. The computer network of claim 1, further comprising:
means for receiving the node ID or the user ID from the user node,
means for monitoring the traffic between the user node and the master node, and
means for transferring target information to the user node minimizing additional communication delay between the master node and the user node,

11. The computer network of claim 10, wherein the means for receiving the target information further includes
means for receiving the target information reference for the current user, and
means for requesting the target information using the target information reference.

12. The computer network of claim 10, wherein the transferring means includes
means for sending target information during times when non-target information packets are not being sent.

13. The computer network of claim 12, wherein the sending means includes
a shift register to receive each bit of non-target information packets,
a detector to detect an identification bit pattern of non-target information packets in the shift register,
a flow controller to control transfer of target information packets by opening and closing a gate in response to the detected identification bit pattern, and
means for delaying a start signal initiating transfer of target information packets in response to a detected trailer bit until transfer of non-target information packet is complete.

14. The computer network of claim 12, wherein the sending means includes
means for monitoring length of time necessary for transfer of each target information packet, and
means for adjusting the rate of target information transfer in response to the monitored transfer time.

15. The computer network of claim 14, wherein the monitoring means includes
means for estimating amount of network traffic by measuring length of time between transmittal of target information packet by the master node and a message of receipt by the user node.

16. The computer network of claim 15, wherein the monitoring means includes
means for recording when each target information packet is transmitted by the master node,
means for receiving acknowledgement of receipt from the user node, and
means for estimating amount of network traffic by determining length of time between the transmittal and the receipt.

17. A master program server (140), coupled to a master node (130) and a master database in a computer network (100), for connecting information providers (160) and users (122) comprising:
means for receiving, through the master node, a user ID corresponding to a current user of the user node or a node ID corresponding to the user node; means for accessing user profile information corresponding to the user ID or node ID; and
means for transmitting to the user node, through the master node, a target information reference corresponding to the accessed user profile, wherein the target information reference is a pointer to the target to be delivered to the user node
while transferring non-target information minimizing additional communication delay.

18. The master program server of claim 17, further comprising means for registering the user node at the master node.

19. A user node (120) in a computer network (100) for connecting information providers (160) and users (122) having a master node (130), a master database (143), and a master program server (140), the user node comprising
means for sending to the master node a node ID corresponding to the user node or a user ID corresponding to a current user of the user node;
means for receiving a target information reference from the master program server through the master node;
means for fetching target information using the target information reference;
means for controlling the transfer of target information in the background while transferring non-target information without additional communication delay between the master node and the user node; and
means for receiving from the master node the target information corresponding to the target information reference, and
wherein the controlling means includes means for measuring round-trip delay time for delivering the target information.

20. The user node of claim 19, wherein the controlling means further includes
means for computing a ratio between the round-trip delay time and a predetermined minimum round-trip delay time for delivering the target information, and
means for adjusting a transmission rate of the target information based on the computed ratio.

21. A method of connecting information providers (160) and user nodes (120) of a computer network (100), comprising the steps of:
transmitting from a user node to a master program server a node ID corresponding to the user node or a user ID corresponding to a current user of the user node;
accessing, by the master program server, profile information corresponding to the node ID or to the user ID;
transmitting, by the maser program server, a target information reference corresponding to the accessed profile information to the user node;
fetching, by the user node, target information using the target information reference;
controlling, by the user node, the transfer of the target information in a background state while receiving non-target information to the user node without additional communication delay; and
receiving, by the user node, the target information.

22. The method of claim 21, wherein the controlling step includes the step of measuring round-trip delay time for delivering the target information.

23. The method of claim 22, wherein the controlling step further includes the steps of
computing a ratio between the round-trip delay time and a predetermined minimum round-trip delay time for delivering the target information, and
adjusting a transmission rate of the target information based on the computed ratio.

24. The method of claim 21, wherein the controlling step includes the step of requesting the target information corresponding to the target information reference.

25. The method of claim 21, wherein the controlling step includes the step of fetching the target information during times when non-target information is not being sent.

26. The method of claim 21, further including the step of displaying the transferred target information.

27. The method of claim 26, wherein the displaying step further includes the steps of monitoring a predetermined display period of the target information.

28. The method of claim 26, wherein the displaying step further includes the step of disabling user control of the display during the display of the target information.

29. The method of claim 26, wherein the displaying step further includes the step of enabling user control of the display after expiration of a predetermined display period.

30. The method of claim 21, wherein the master program server performs the following steps:
registering the user node at a the master node; and
receiving, through the master node, a node ID from the user node.

31. The method of claim 21, wherein the controlling step includes the step of measuring round-trip delay time for delivering the target information.

32. The method of claim 31, wherein the controlling step further includes the steps of
computing a ratio between the round-trip delay time and a predetermined minimum round-trip delay time for delivering the target information, and
adjusting a transmission rate of the target information based on the computed ratio.

33. The method of claim 21, wherein the control of the transfer of the target information comprises:
requesting a transfer of target information from a master node tot he user node using the target information reference; and
transferring the requested target information from the master node tot he user node minimizing additional communication delay between the master node and the node.

34. The method of claim 33, wherein the step of receiving the target information further includes the steps of
receiving the target information reference for the current user, and
requesting the target information using the target information reference.

35. The method of claim 33, wherein the transferring step includes the step of sending target information packets during times when non-target information packets are not being sent.

36. The method of claim 35, wherein the sending step includes
storing each bit of non-target information packets in a shift register,
detecting an identification bit pattern of non-target information packets in a shift register,
controlling a transfer gate of the shift register in response tot he detected identification bit pattern, and
delaying a start signal initiating transfer of target information packets in response to the detected identification bit pattern until transfer of non-target information packet is complete.

37. The method of claim 35, wherein the sending step includes
monitoring length of time necessary to transfer each target information packet, and
adjusting the rate of target information transfer in response to the monitored transfer time.

38. The method of claim 37, wherein the monitoring step includes estimating amount of network traffic by measuring length of time between transmittal of target information packet by the master node and a message of receipt by the user node.

39. The method of claim 37, wherein the monitoring step includes
recording when each target information packet is transmitted by the master node,
receiving a message from the user node acknowledging receipt of the packet, and
estimating amount of network traffic by determining length of time between the transmittal and the message acknowledging receipt.

40. The method of claim 21, wherein the target information reference is a pointer to the target information to be delivered to the user node.

## Patentansprüche

1. Computernetzwerk (100) zum Verbinden von Informationsanbietern und Benutzern, mit:
einem Benutzerknoten (120) mit
Einrichtungen zum Senden eines Knotenkennzeichens entsprechend dem Benutzerknoten oder eines Benutzerkennzeichens entsprechend einem momentanen Benutzer des Benutzerknotens,
Einrichtungen zum Empfangen einer Zielinformationsreferenz,
Einrichtungen zum Abrufen von Zielinformationen unter Verwendung der Zielinformationsreferenz und
Einrichtungen zum Steuern der Übertragung der Zielinformation in einem Hintergrundzustand, während dem Nicht-Zielinformationen empfangen werden, an den Benutzerknoten ohne zusätzliche Kommunikationsverzögerung;
mit einer Hauptdatenbank (143), die Profilinformationen und zugeordnete Zielinformationsreferenzen enthält,
mit einem Hauptknoten (130), der mit dem Benutzerknoten verbunden ist und Einrichtungen zum Übertragen der Zielinformation zu den Benutzerknoten umfasst; und
mit einem Hauptprogrammserver (140), der mit dem Hauptknoten und mit der Hauptdatenbank verbunden ist und
Einrichtungen zum Empfangen des Knotenkennzeichens oder des Benutzerkennzeichens von dem Benutzerknoten aufweist, ferner
Einrichtungen zum Zugriff auf Profilinformationen von der Hauptdatenbank entsprechend dem Knotenkennzeichen oder dem Benutzerkennzeichen und
Einrichtungen zum Übertragen der Zielinformationsreferenz entsprechend der zugegriffenen Profilinformation zu dem Benutzerknoten über den Hauptknoten.

2. Computernetzwerk nach Anspruch 1, wobei die Steuereinrichtungen Einrichtungen zum Messen der Durchlaufverzögerung zum Ausliefern der Zielinformation aufweisen.

3. Computernetzwerk nach Anspruch 2, wobei die Steuereinrichtungen ferner Einrichtungen zum Berechnen eines Verhältnisses zwischen der Durchlaufverzögerungszeit und einer vorbestimmten minimalen Durchlaufverzögerungszeit zum Liefern der Zielinformation und Einrichtungen zum Einstellen einer Übertragungsrate der Zielinformation auf der Basis des berechneten Verhältnisses aufweisen.

4. Computernetzwerk nach Anspruch 1, wobei die Steuereinrichtungen ferner Einrichtungen zum Anfordern der Zielinformation entsprechend der Zielinformationsreferenz aufweisen.

5. Computernetzwerk nach Anspruch 1, wobei die Steuereinrichtungen Einrichtungen zum Abrufen der Zielinformation in Zeiten aufweisen, während denen Nicht-Zielinformationen nicht gesendet werden.

6. Computernetzwerk nach Anspruch 1, wobei der Benutzerknoten ferner Einrichtungen zum Anzeigen der Zielinformation aufweist.

7. Computernetzwerk nach Anspruch 6, wobei die Anzeigeeinrichtungen Einrichtungen zum Überwachen einer vorbestimmten Anzeigezeitspanne der Zielinformation aufweisen.

8. Computernetzwerk nach Anspruch 6, wobei die Anzeigeeinrichtungen Einrichtungen zum Ausschalten einer Benutzersteuerung der Anzeige während der Anzeige der Zielinformation aufweisen.

9. Computernetzwerk nach Anspruch 6, wobei die Anzeigeeinrichtungen Einrichtungen zum Ermöglichen einer Benutzersteuerung der Anzeige nach Ablauf einer vorbestimmten Anzeigezeitspanne aufweisen.

10. Computernetzwerk nach Anspruch 1 mit den weiteren Merkmalen:
Einrichtungen zum Empfangen des Knotenkennzeichens oder des Benutzerkennzeichens von dem Benutzerknoten,
Einrichtungen zum Überwachen des Datenaustausches zwischen dem Benutzerknoten und dem Hauptknoten und
Einrichtungen zum Übertragen von Zielinformationen zu dem Benutzerknoten, wobei zusätzliche Kommunikationsverzögerungen zwischen dem Hauptknoten und dem Benutzerknoten minimiert werden.

11. Computernetzwerk nach Anspruch 10, wobei die Einrichtungen zum Empfangen der Zielinformation ferner
Einrichtungen zum Empfangen der Zielinformationsreferenz für den momentanen Benutzer und
Einrichtungen zum Anfordern der Zielinformation unter Verwendung der Zielinformationsreferenz aufweisen.

12. Computernetzwerk nach Anspruch 10, wobei die Übertragungseinrichtungen
Einrichtungen zum Senden einer Zielinformation in Zeiten aufweist, in denen Nicht-Zielinformationspakete nicht gesendet werden.

13. Computernetzwerk nach Anspruch 12, wobei die Sendeeinrichtungen aufweisen
ein Schieberegister zum Empfang jedes Bits von Nicht-Zielinformationspaketen,
einen Detektor zum Detektieren eines Identifizierungs-Bitmusters von Nicht-Zielinformationspaketen in dem Schieberegister,
eine Flusssteuerung zum Steuern der Übertragung von Zielinformationspaketen, indem ein Tor in Antwort auf das detektierte Identifizierungs-Bitmuster geöffnet oder geschlossen wird, und
Einrichtungen zum verzögerten Abgeben eines Startsignales zum Einleiten der Übertragung von Zielinformationspaketen in Antwort auf ein detektiertes Nachlauf-Bit, bis die Übertragung eines Nicht-Zielinformationspaketes vollständig ist.

14. Computernetzwerk nach Anspruch 12, wobei die Sendeeinrichtungen aufweisen
Einrichtungen zum Überwachen der Länge der Zeit, die für die Übertragung eines jeden Zielinformationspaketes notwendig ist, und
Einrichtungen zum Einstellen der Rate der Zielinformationsübertragung in Antwort auf die überwachte Übertragungszeit.

15. Computernetzwerk nach Anspruch 14, wobei die Überwachungseinrichtungen
Einrichtungen zum Abschätzen der Menge des Netzwerkdatenaustausches durch Messen der Länge der Zeit zwischen der Übertragung eines Zielinformationspaketes durch den Hauptknoten und einer Empfangsbotschaft durch den Benutzerknoten aufweisen.

16. Computernetzwerk nach Anspruch 15, wobei die Überwachungseinrichtungen aufweisen
Einrichtungen zum Aufzeichnen, wenn jedes Zielinformationspaket durch den Hauptknoten übertragen wird, Einrichtungen zum Empfangen einer Empfangsbestätigung von dem Benutzerknoten und
Einrichtungen zum Abschätzen des Netzwerk-Datenaustausches durch Bestimmen der Länge der Zeit zwischen der Übertragung und dem Empfang.

17. Hauptprogrammserver (140), der mit einem Hauptknoten (130) und einer Hauptdatenbank in einem Computernetzwerk (100) verbunden ist, um Informationsanbieter (160) und Benutzer (122) zu verbinden, mit folgenden Merkmalen:
Einrichtungen zum Empfangen eines Benutzerkennzeichens über den Hauptknoten entsprechend einem momentanen Benutzer des Hauptknotens oder eines Knotenkennzeichens entsprechend dem Benutzerknoten;
Einrichtungen zum Zugriff einer Benutzerprofilinformation entsprechend dem Benutzerkennzeichen oder dem Knotenkennzeichen; und
Einrichtungen zum Übertragen einer Zielinformationsreferenz entsprechend dem zugegriffenen Benutzerprofil zu dem Benutzerknoten über den Hauptknoten, wobei die Zielinformationsreferenz ein zu dem Benutzerknoten zu übermittelnder Adressenhinweis auf das Ziel ist,
während Nicht-Zielinformationen übertragen werden und zusätzliche Kommunikationsverzögerung minimiert wird.

18. Hauptprogrammserver nach Anspruch 17, wobei ferner Einrichtungen zum Registrieren des Benutzerknotens an dem Hauptknoten vorgesehen sind.

19. Benutzerknoten (120) in einem Computernetzwerk (100) zum Verbinden von Informationsanbietern (160) und Benutzern (122), mit einem Hauptknoten (130), einer Hauptdatenbank (143) und einem Hauptprogrammserver (140), wobei der Benutzerknoten aufweist
Einrichtungen zum Senden eines Knotenkennzeichens entsprechend dem Benutzerknoten oder eines Benutzerkennzeichens entsprechend einem momentanen Benutzer des Benutzerknotens zu dem Hauptknoten;
Einrichtungen zum Empfangen einer Zielinformationsreferenz von dem Hauptprogrammserver über den Hauptknoten;
Einrichtungen zum Abrufen von Zielinformationen unter Verwendung der Zielinformationsreferenz;
Einrichtungen zum Steuern der Übertragung von Zielinformationen im Hintergrund, während Nicht-Zielinformationen ohne zusätzliche Kommunikationsverzögerung zwischen dem Hauptknoten und dem Benutzerknoten übertragen werden; und
Einrichtungen zum Empfangen der Zielinformation entsprechend der Zielinformationsreferenz von dem Hauptknoten und
wobei die Steuereinrichtungen Einrichtungen zum Messen der Durchlaufverzögerungszeit zum Ausliefern der Zielinformation einschließen.

20. Benutzerknoten nach Anspruch 19, wobei die Steuereinrichtungen ferner aufweisen
Einrichtungen zum Berechnen eines Verhältnisses zwischen der Durchlaufverzögerungszeit und einer vorbestimmten minimalen Durchlaufverzögerungszeit zum Ausliefern der Zielinformation und
Einrichtungen zum Einstellen einer Übertragungsrate der Zielinformation auf der Basis des berechneten Verhältnisses.

21. Verfahren zum Verbinden von Informationsanbietern (160) und Benutzerknoten (120) eines Computernetzwerkes (100) mit folgenden Schritten:
Übertragen eines Knotenkennzeichens entsprechend dem Benutzerknoten oder eines Benutzerkennzeichens entsprechend einem momentanen Benutzer des Benutzerknotens von einem Benutzerknoten zu einem Hauptprogrammserver;
Zugreifen auf eine Profilinformation entsprechend dem Knotenkennzeichen oder dem Benutzerkennzeichen durch den Hauptprogrammserver;
Übertragen einer Zielinformationsreferenz entsprechend der zugegriffenen Profilinformation durch den Hauptprogrammserver zu dem Benutzerknoten;
Abrufen der Zielinformation durch den Benutzerknoten unter Verwendung der Zielinformationsreferenz;
Steuern der Übertragung der Zielinformation in einem Hintergrundstatus durch den Benutzerknoten, während Nicht-Zielinformationen zu dem Benutzerknoten ohne zusätzliche Kommunikationsverzögerung übertragen werden; und
Empfangen der Zielinformation durch den Benutzerknoten.

22. Verfahren nach Anspruch 21, wobei der Steuerschritt den Schritt umfasst, die Durchlaufverzögerungszeit zum Ausliefern der Zielinformation zu messen.

23. Verfahren nach Anspruch 22, wobei der Steuerschritt ferner die Schritte aufweist,
ein Verhältnis zwischen der Durchlaufverzögerungszeit und einer vorbestimmten minimalen Durchlaufverzögerungszeit zum Ausliefern der Zielinformation zu berechnen, und
eine Übertragungsrate der Zielinformation auf der Basis des berechneten Verhältnisses einzustellen.

24. Verfahren nach Anspruch 21, wobei der Steuerschritt ferner den Schritt aufweist,
die Zielinformation entsprechend der Zielinformationsreferenz abzufragen.

25. Verfahren nach Anspruch 21, wobei der Steuerschritt ferner den Schritt aufweist,
die Zielinformation in Zeiten abzurufen, wenn Nicht-Zielinformationen nicht gesendet werden.

26. Verfahren nach Anspruch 21, wobei ferner der Schritt vorgesehen ist,
die übertragene Zielinformation anzuzeigen.

27. Verfahren nach Anspruch 26, wobei ferner der Anzeigeschritt die Schritte aufweist,
eine vorbestimmte Anzeigezeitspanne der Zielinformation zu überwachen.

28. Verfahren nach Anspruch 26, wobei der Anzeigeschritt ferner den Schritt aufweist,
eine Benutzersteuerung der Anzeige während der Anzeige der Zielinformation zu sperren.

29. Verfahren nach Anspruch 26, wobei der Anzeigeschritt ferner den Schritt aufweist,
die Benutzersteuerung der Anzeige nach Ablauf einer vorbestimmten Anzeigezeitspanne freizugeben.

30. Verfahren nach Anspruch 21, wobei ein Hauptprogrammserver die folgenden Schritte ausführt:
Registrieren des Benutzerknotens an einem Hauptknoten; und
Empfangen eines Knotenkennzeichens von dem Benutzerknoten über den Hauptknoten.

31. Verfahren nach Anspruch 21, wobei der Steuerschritt den Schritt umfasst,
die Durchlaufverzögerungszeit zum Liefern der Zielinformation zu messen.

32. Verfahren nach Anspruch 31, wobei der Steuerschritt ferner die Schritte aufweist,
ein Verhältnis zwischen der Durchlaufverzögerungszeit und einer vorbestimmten minimalen Durchlaufverzögerungszeit zum Ausliefern der Zielinformation zu berechnen und
eine Übertragungsrate der Zielinformation auf der Basis des berechneten Verhältnisses einzustellen.

33. Verfahren nach Anspruch 21, wobei die Steuerung der Übertragung der Zielinformation folgende Schritte aufweist:
Anfordern einer Übertragung einer Zielinformation von einem Hauptknoten zu dem Benutzerknoten unter Verwendung der Zielinformationsreferenz; und
Übertragen der angeforderten Zielinformation von dem Hauptknoten zu dem Benutzerknoten, wobei zusätzliche Kommunikationsverzögerung zwischen dem Hauptknoten und dem Knoten minimiert wird.

34. Verfahren nach Anspruch 33, wobei der Schritt des Empfangens der Zielinformation ferner die Schritte aufweist,
die Zielinformationsreferenz für den momentanen Benutzer zu empfangen und
die Zielinformation unter Verwendung der Zielinformationsreferenz anzufordern.

35. Verfahren nach Anspruch 33, wobei der Übertragungsschritt den Schritt aufweist,
Zielinformationspakete in Zeiten zu senden, wenn Nicht-Zielinformationspakete nicht gesendet werden.

36. Verfahren nach Anspruch 35, wobei der Sendeschritt folgende Schritte umfasst:
Speichern eines jeden Bits von Nicht-Zielinformationspaketen in einem Schieberegister,
Detektieren eines Identifizierungs-Bitmusters von Nicht-Zielinformationspaketen in einem Schieberegister,
Steuern eines Übertragungstores des Schieberegisters in Antwort auf das detektierte Identifizierungs-Bitmuster, und
verzögertes Abgeben eines Startsignales zum Initiieren der Übertragung der Zielinformationspakete in Antwort auf das detektierte Identifizierungs-Bitmuster, bis die Übertragung des Nicht-Zielinformationspaketes vollendet ist.

37. Verfahren nach Anspruch 35, wobei der Sendeschritt die Merkmale umfasst,
die Länge der Zeit zu überwachen, die für die Übertragung eines jeden Zielinformationspaketes notwendig ist, und
die Rate der Zielinformationsübertragung in Antwort auf die überwachte Übertragungszeit einzustellen.

38. Verfahren nach Anspruch 37, wobei der Überwachungsschritt einschließt,
die Menge des Datenaustauschtransfers im Netzwerk durch Messen der Zeit zwischen der Übertragung eines Zielinformationspaketes durch den Hauptknoten und einer Empfangsbotschaft durch den Benutzerknoten abzuschätzen.

39. Verfahren nach Anspruch 37, wobei der Überwachungsschritt die folgenden Schritte einschließt:
Aufzeichnen, wenn jedes Zielinformationspaket durch den Hauptknoten übertragen wird,
Empfangen einer Botschaft von dem Benutzerknoten, mit der der Empfang des Paketes bestätigt wird, und
Abschätzen der Menge des Datenaustausches in dem Netzwerk durch Bestimmen der Länge der Zeit zwischen der Übertragung und der Botschaft zur Bestätigung des Empfanges.

40. Verfahren nach Anspruch 21, wobei die Zielinformationsreferenz ein Adressenhinweis auf die zu dem Benutzerknoten zu liefernde Zielinformation ist.

## Revendications

1. Réseau informatique (100) permettant de connecter les fournisseurs d'informations et les utilisateurs, comprenant :
un noeud utilisateur comportant
des moyens pour envoyer une identification (ID) de noeud correspondant au noeud utilisateur, ou une identification (ID) d'utilisateur correspondant à l'utilisateur actuel du noeud utilisateur,
des moyens pour recevoir une référence des informations cibles,
des moyens pour extraire des informations cibles en utilisant la référence des informations cibles, et
des moyens pour commander le transfert des informations cibles en arrière-plan tout en recevant des informations non cibles au noeud utilisateur sans délai de communication supplémentaire;
une base de données principale (143) contenant des informations relatives au profil et la référence des informations cibles correspondantes,
un noeud principal (130), couplé au noeud utilisateur, et comportant des moyens pour transférer les informations cibles vers le noeud utilisateur; et
un serveur de programmes principal (140), couplé au noeud principal et à la base de données principale, et comportant
des moyens pour recevoir l'identification (ID) de noeud ou l'identification (ID) d'utilisateur à partir du noeud utilisateur,
des moyens pour accéder, à partir de la base de données principale, aux informations relatives au profil correspondant à l'identification (ID) de noeud ou à l'identification (ID) d'utilisateur, et
des moyens pour transmettre au noeud utilisateur, par l'intermédiaire du noeud principal, la référence des informations cibles correspondant aux informations relatives au profil qui ont été accédées.

2. Réseau informatique selon la revendication 1, dans lequel les moyens de commande comportent
des moyens pour mesurer le temps de propagation aller-retour pour délivrer les informations cibles.

3. Réseau informatique selon la revendication 2, dans lequel les moyens de commande comportent en outre
des moyens pour calculer un rapport entre le temps de propagation aller-retou et un temps de propagation aller-retour minimum prédéterminé pour délivrer les informations cibles, et
des moyens pour ajuster un débit de transmission des informations cibles en fonction du rapport calculé.

4. Réseau informatique selon la revendication 1, dans lequel les moyens de commande comportent en outre
des moyens pour demander les informations cibles correspondant à la référence des informations cibles.

5. Réseau informatique selon la revendication 1, dans lequel les moyens de commande comportent
des moyens pour extraire les informations cibles pendant les périodes où les informations non cibles ne sont pas envoyées.

6. Réseau informatique selon la revendication 1, dans lequel le noeud utilisateur comporte en outre
des moyens pour afficher les informations cibles.

7. Réseau informatique selon la revendication 6, dans lequel les moyens d'affichage comportent
des moyens pour surveiller une période d'affichage prédéterminée des informations cibles.

8. Réseau informatique selon la revendication 6, dans lequel les moyens d'affichage comportent
des moyens pour désactiver la commande de l'affichage par l'utilisateur pendant l'affichage des informations cibles.

9. Réseau informatique selon la revendication 6, dans lequel les moyens d'affichage comportent
des moyens pour activer la commande de l'affichage par l'utilisateur après expiration d'une période d'affichage prédéterminée.

10. Réseau informatique selon la revendication 1, comprenant en outre :
des moyens pour recevoir l'identification (IID) de noeud ou l'identification (ID) d'utilisateur à partir du noeud utilisateur,
des moyens pour surveiller le trafic entre le noeud utilisateur et le noeud principal, et
des moyens pour transférer les informations cibles vers le noeud utilisateur en réduisant au minimum le délai de communication supplémentaire entre le noeud principal et le noeud utilisateur.

11. Réseau informatique selon la revendication 10, dans lequel les moyens permettant de recevoir les informations cibles comportent en outre
des moyens pour recevoir la référence des informations cibles pour l'utilisateur actuel, et
des moyens pour demander les informations cibles en utilisant la référence des informations cibles.

12. Réseau informatique selon la revendication 10, dans lequel les moyens de transfert comportent
des moyens pour envoyer les informations cibles pendant les périodes où les paquets d'informations non cibles ne sont pas envoyés.

13. Réseau informatique selon la revendication 12, dans lequel les moyens d'envoi comportent
un registre à décalage pour recevoir chaque bit de paquets d'informations non cibles,
un détecteur pour détecter une configuration binaire d'identification des paquets d'informations non cibles dans le registre à décalage,
un régulateur de flux pour commander le transfert des paquets d'informations cibles en ouvrant et en fermant une passerelle en réponse à la configuration binaire d'identification détectée, et
des moyens pour retarder un signal de départ initiant le transfert des paquets d'informations cibles en réponse à un bit de fin de trame détecté jusqu'à ce que le transfert du paquet d'informations non cibles soit achevé.

14. Réseau informatique selon la revendication 12, dans lequel les moyens d'envoi comportent
des moyens pour surveiller la durée nécessaire pour le transfert de chaque paquet d'informations cibles, et
des moyens pour ajuster le débit du transfert des informations cibles en réponse au temps de transfert surveillé.

15. Réseau informatique selon la revendication 14, dans lequel les moyens de surveillance comportent
des moyens pour estimer le volume du trafic du réseau en mesurant le temps entre la transmission du paquet d'informations cibles par le noeud principal et un message de réception par le noeud utilisateur.

16. Réseau informatique selon la revendication 15, dans lequel les moyens de surveillance comportent
des moyens pour enregistrer le moment de la transmission de chaque paquet d'informations cibles par le noeud maître,
des moyens pour recevoir l'accusé de réception à partir du noeud utilisateur, et
des moyens pour estimer le volume du trafic du réseau en déterminant le temps entre la transmission et la réception.

17. Serveur de programmes principal (140), couplé à un noeud principal (130) et à une base de données principale dans un réseau informatique (100), pour connecter les fournisseurs d'informations (160) et les utilisateurs (122) comprenant :
des moyens pour recevoir, par l'intermédiaire du noeud maître, une identification (ID) d'utilisateur correspondant à un utilisateur actuel du noeud utilisateur et une identification (ID) de noeud correspondant au noeud utilisateur;
des moyens pour accéder aux informations relatives au profil d'utilisateur correspondant à l'identification (ID) d'utilisateur ou à l'identification (ID) de noeud; et
des moyens pour transmettre au noeud utilisateur, par l'intermédiaire du noeud maître, une référence des informations cibles correspondant au profil d'utilisateur accédé, dans lesquels la référence des informations cibles est un indicateur de la cible à délivrer au noeud utilisateur
tout en transférant les informations non cibles en réduisant au minimum le délai de communication supplémentaire.

18. Serveur de programmes principal selon la revendication 17, comprenant en outre des moyens pour enregistrer le noeud utilisateur au niveau du noeud maître.

19. Noeud utilisateur (120) dans un réseau informatique (100) pour connecter les fournisseurs d'informations (160) et les utilisateurs (122) ayant un noeud principal (130), une base de données principale (143), et un serveur de programmes principal (140), le noeud utilisateur comprenant :
des moyens pour envoyer au noeud principal une identification (ID) de noeud correspondant au noeud utilisateur ou une identification (ID) d'utilisateur correspondant à un utilisateur actuel du noeud utilisateur;
des moyens pour recevoir la référence des informations cibles à partir du serveur de programmes principal par l'intermédiaire du noeud maître;
des moyens pour extraire les informations cibles en utilisant la référence des informations cibles;
des moyens pour commander le transfert des informations cibles en arrière-plan tout en transférant les informations non cibles sans délai de communication supplémentaire entre le noeud principal et le noeud utilisateur; et
des moyens pour recevoir à partir du noeud principal les informations cibles correspondant à la référence des informations cibles, et
dans lequel les moyens de commande comportent des moyens pour mesurer le temps de propagation aller-retour pour délivrer les informations cibles.

20. Noeud utilisateur selon la revendication 19, dans lequel les moyens de commande comportent en outre
des moyens pour calculer un rapport entre le temps de propagation aller-retour et un temps de propagation aller-retour minimum prédéterminé permettant de livrer les informations cibles, et
des moyens pour ajuster un débit de transmission des informations cibles en fonction du rapport calculé.

21. Procédé pour connecter les fournisseurs d'informations (160) et les noeuds utilisateurs (120) d'un réseau informatique (100), comprenant les étapes consistant à :
transmettre à partir du noeud utilisateur vers un serveur de programmes principal une identification (ID) de noeud correspondant au noeud utilisateur ou une identification (ID) d'utilisateur correspondant à un utilisateur actuel du noeud utilisateur;
accéder, par l'intermédiaire du serveur de programmes maître, aux informations relatives au profil correspondant à l'identification (ID) de noeud ou à l'identification (ID) d'utilisateur;
transmettre au noeud utilisateur, par l'intermédiaire du serveur de programmes maître, la référence des informations cibles correspondant aux informations relatives au profil qui ont été accédées;
extraire, par l'intermédiaire du noeud utilisateur, les informations cibles en utilisant la référence des informations cibles;
commander, par l'intermédiaire du noeud utilisateur, le transfert des informations cibles en arrière-plan tout en recevant les informations non cibles au niveau du noeud utilisateur sans délai de communication supplémentaire; et
recevoir, par l'intermédiaire du noeud utilisateur, les informations cibles.

22. Procédé selon la revendication 21, dans lequel l'étape de commande comporte l'étape consistant à
mesurer le temps de propagation aller-retour permettant de délivrer les informations cibles.

23. Procédé selon la revendication 22, dans lequel l'étape de commande comporte en outre les étapes consistant à
calculer un rapport entre le temps de propagation aller-retour et un temps de propagation aller-retour minimum prédéterminé permettant de délivrer les informations cibles, et
ajuster un débit de transmission des informations cibles en fonction du rapport calculé.

24. Procédé selon la revendication 21, dans lequel l'étape de commande comporte l'étape consistant à
demander des informations cibles correspondant à la référence des informations cibles.

25. Procédé selon la revendication 21, dans lequel l'étape de commande comporte l'étape consistant à
extraire les informations cibles pendant les périodes où les informations non cibles ne sont pas envoyées.

26. Procédé selon la revendication 21, comportant en outre l'étape consistant à
afficher les informations cibles transférées.

27. Procédé selon la revendication 26, dans lequel l'étape d'affichage comporte en outre l'étape consistant à
surveiller une période d'affichage prédéterminée des informations cibles.

28. Procédé selon la revendication 26, dans lequel l'étape d'affichage comporte en outre l'étape consistant à
invalider la commande de l'utilisateur de l'affichage lors de l'affichage des informations cibles.

29. Procédé selon la revendication 26, dans lequel l'étape d'affichage comporte en outre l'étape consistant à
désactiver la commande de l'affichage par l'utilisateur après expiration d'une
période d'affichage prédéterminée.

30. Procédé selon la revendication 21, dans lequel le serveur de programmes principal réalise les étapes suivantes :
enregistrer le noeud utilisateur au niveau d'un noeud maître; et
recevoir, par le biais d'un noeud maître, une identification (ID) de noeud à partir du noeud utilisateur.

31. Procédé selon la revendication 21, dans lequel l'étape de commande comporte l'étape consistant à
mesurer le temps de propagation aller-retour permettant de délivrer les informations cibles.

32. Procédé selon la revendication 31, dans lequel l'étape de commande comporte en outre les étapes consistant à
calculer un rapport entre le temps de propagation aller-retour et un temps de propagation aller-retour minimum permettant de délivrer les informations cibles, et
ajuster un débit de transmission des informations cibles en fonction du rapport calculé.

33. Procédé selon la revendication 21, dans lequel la commande du transfert des informations cibles comprend :
la demande d'un transfert d'informations cibles à partir du noeud principal vers le noeud utilisateur en utilisant la référence des informations cibles; et
le transfert des informations cibles demandées à partir du noeud principal vers le noeud utilisateur réduisant au minimum le délai de communication supplémentaire entre le noeud principal et le noeud.

34. Procédé selon la revendication 33, dans lequel l'étape consistant à recevoir les informations cibles comporte en outre les étapes consistant à
recevoir la référence des informations cibles pour l'utilisateur actuel, et demander les informations cibles en utilisant la référence des informations cibles.

35. Procédé selon la revendication 33, dans lequel l'étape de transfert comporte l'étape consistant à
envoyer des paquets d'informations cibles pendant les périodes où les paquets d'informations non cibles ne sont pas envoyés.

36. Procédé selon la revendication 35, dans lequel l'étape d'envoi comporte l'enregistrement de chaque bit de paquets d'informations non cibles dans un registre à décalage,
la détection d'une configuration binaire d'identification des paquets d'informations non cibles dans un registre à décalage,
la commande d'une passerelle de transfert du registre à décalage, en réponse à la configuration binaire d'identification détectée, et
le report d'un signal de départ initiant le transfert des paquets d'informations cibles en réponse à la configuration binaire d'identification détectée jusqu'à ce que le transfert du paquet d'informations non cibles soit achevé.

37. Procédé selon la revendication 35, dans lequel l'étape d'envoi comporte
la surveillance du temps nécessaire pour transférer chaque paquet d'informations cibles, et
l'ajustement du débit du transfert d'informations cibles en réponse au temps de transfert surveillé.

38. Procédé selon la revendication 37, dans lequel l'étape de surveillance comporte l'estimation du volume du trafic du réseau en mesurant le temps entre la transmission du paquet d'informations cibles par le noeud principal et un message de réception par le noeud utilisateur.

39. Procédé selon la revendication 37, dans lequel l'étape de surveillance comporte l'enregistrement de la transmission par le noeud principal de chaque paquet d'informations cibles;
la réception d'un message provenant du noeud utilisateur accusant réception du paquet, et
l'estimation du volume du trafic du réseau en déterminant le temps entre la transmission et le message accusant réception.

40. Procédé selon la revendication 21, dans lequel la référence des informations cibles est un pointeur vers les informations cibles devant être délivrées au noeud utilisateur.
